# EUROPEAN PATENT APPLICATION

(11) **EP 3 858 538 A1**
(43) Date of publication of application: **04.08.2021**
(21) Application number: 19866061.5
(22) Date of filing: 03.09.2019
(51) Int. Cl.: B23K 35/363, B23K 35/26, C22C 13/00

(54) **SOLDER COMPOSITION AND ELECTRONIC SUBSTRATE**

(30) Priority: 27.09.2018 JP 2018182461; 02.09.2019 JP 2019159582
(71) Applicant: Tamura Corporation, Tokyo 178-8511 (JP)
(72) Inventor: EINISHI Hiro, Iruma-shi, Saitama 358-8501 (JP); USUKURA Shinichi, Iruma-shi, Saitama 358-8501 (JP); YOSHIZAWA Shinji, Iruma-shi, Saitama 358-8501 (JP); IWABUCHI Mitsuru, Iruma-shi, Saitama 358-8501 (JP)
(74) Representative: Grünecker Patent- und Rechtsanwälte PartG mbB
(86) International application number: PCT/JP2019/034542
(87) International publication number: WO 2020/066489

(57) **Abstract**

A solder composition of the invention contains: a flux composition containing an (A) component in a form of a rosin-based resin, a (B) component in a form of an activator, and a (C) component in a form of a solvent; and a (D) component in a form of a solder powder whose melting point ranges from 200 degrees C to 250 degrees C, the (B) component containing at least one carboxylic acid selected from the group consisting of (B1) an aromatic carboxylic acid having hydroxyl groups only at an ortho position or a pros position, (B2) a dicarboxylic acid having an alkylene group and 2 to 8 carbon atoms, and (B3) a monocarboxylic acid having an alkyl group and 2 to 8 carbon atoms, the (C) component containing (C1) a diol or a diol diacetate whose boiling point ranges from 220 to 250 degrees C.

## Description

### TECHNICAL FIELD

The present invention relates to a solder composition and an electronic board.

### BACKGROUND ART

A solder composition is a paste mixture provided by kneading a solder powder and a flux composition (rosin-based resin(s), activator(s), solvent(s), and the like) (see, for instance, Patent Literature 1). It is required for the solder composition to exhibit void reducibility and printability, as well as solderability (e.g. solder meltability, and solder spreadability (wettability)).

Meanwhile, in order to achieve increasingly diversifying functions of electronic devices, large-size electronic components have come to be installed on an electronic board. Further, some of the large-size electronic components (e.g. QFN (Quad Flatpack No Lead) and power transistor) have large electrode terminals. Such electronic components, which have large print area for the solder composition, are likely to cause voids.

### CITATION LIST

### PATENT LITERATURE(S)

Patent Literature 1 Japanese Patent No. 5756067

### SUMMARY OF THE INVENTION

### PROBLEM(S) TO BE SOLVED BY THE INVENTION

In order to reduce voids, a use of high-boiling and highly viscous solvent (e.g. isobornyl cyclohexanol) in the solder composition has been studied. However, it has been found that the use of the high-boiling and highly viscous solvent is still not sufficient to reduce the voids in the electronic components having large electrode terminals such as QFN.

In view of the above, an object of the invention is to provide a solder composition capable of sufficiently reducing voids, and an electronic board using the solder composition.

### MEANS FOR SOLVING THE PROBLEM(S)

In order to solve the above problem(s), a solder composition and an electronic board as described below are provided according to some aspects of the invention.

A solder composition according to an aspect of the invention contains: a flux composition containing an (A) component in a form of a rosin-based resin, a (B) component in a form of an activator, and a (C) component in a form of a solvent; and a (D) component in a form of a solder powder whose melting point ranges from 200 degrees C to 250 degrees C, in which the (B) component contains at least one carboxylic acid selected from the group consisting of a (B1) component in a form of an aromatic carboxylic acid having hydroxyl groups only at an ortho position or a pros position, a (B2) component in a form of a dicarboxylic acid having an alkylene group and 2 to 8 carbon atoms, and a (B3) component in a form of a monocarboxylic acid having an alkyl group and 2 to 8 carbon atoms, and the (C) component contains a (C1) component in a form of a diol or a diol diacetate whose boiling point ranges from 220 degrees C to 250 degrees C.

In the solder composition of the above aspect of the invention, it is preferable that the (C1) component is at least one compound selected from the group consisting of 1,4-butanediol, 1,5-pentanediol, 2-ethyl-1,3-hexanediol, 1,2-hexanediol, dipropylene glycol, 1,4-butanediol diacetate, and 1,3-butylenediol diacetate.

In the solder composition of the above aspect of the invention, it is preferable that the boiling point of the (C1) component is in a range from 230 degrees C to 250 degrees C.

In the solder composition of the above aspect of the invention, it is preferable that the (B) component further contains a (B4) component in a form of a dimer acid.

An electronic board according to another aspect of the invention includes a soldered part using the solder composition according to the above aspect of the invention.

The reason for the solder composition of the invention to be capable of sufficiently reducing the voids, which is not completely known, is speculated by the present inventors as follows.

Specifically, the solder composition of the invention uses, as the (C) component (solvent), the (C1) component in a form of a diol or diol diacetate whose boiling point is in a range from 220 degrees C to 250 degrees C. The (C1) component partially volatilizes before or while the solder melts to turn into a gas, which acts to push a gas within the solder composition to an outside. Containing unvolatilized (C1) component and thus being fluid to some extent when the solder is melted, the solder composition allows the gas therein to be gradually gathered and expelled to an outside. Thus, the void can be sufficiently reduced. Further, the organic acid can be, depending on the type thereof, an occurrence factor of the void. In contrast, the organic acid (e.g. the (B1) component) unlikely to be the occurrence factor of the void is selectively used in the invention. The inventors speculate that the above is an explanation of a mechanism for achieving an object of the invention.

According to the above aspects of the invention, a solder composition capable of sufficiently reducing voids, and an electronic board using the solder composition can be provided.

### DESCRIPTION OF EMBODIMENT(S)

A solder composition according to the invention contains a below-described flux composition and a below-described (D) a solder powder.

### Flux Composition

Initially, the flux composition used in the invention will be described below. The flux composition used in the invention, which is a component of the solder composition other than the solder powder, includes a rosin-based resin ((A) component), an activator ((B) component), and a solvent ((C) component).

(A) Component

Examples of the (A) component in a form of the rosin-based resin used in the present exemplary embodiment include rosins and rosin-based modified resins. Examples of the rosins include a gum rosin, wood rosin, and tall oil rosin. Examples of the rosin-based modified resins include a disproportionated rosin, polymerized rosin, hydrogenated rosin, and derivatives thereof. Examples of the hydrogenated rosin include a fully hydrogenated rosin, partially hydrogenated rosin, and hydrogenated product of unsaturated-organic-acid modified rosin (also referred to as a "hydrogenated acid modified rosin"), which is a modified rosin of an unsaturated organic acid such as an aliphatic unsaturated monobasic acid (e.g. (meth)acrylic acid), an aliphatic unsaturated dibasic acid (e.g. α,β-unsaturated carboxylic acid such as fumaric acid and maleic acid), and an unsaturated carboxylic acid having an aromatic ring (e.g. cinnamic acid). One of the rosin-based resins may be used alone, or two or more of the rosin-based resins may be mixed for use.

A content of the (A) component with respect to 100 mass% of the flux composition is preferably in a range from 20 mass% to 70 mass%, more preferably in a range from 30 mass% to 60 mass%. With the content of the (A) component being not less than the above lower limit, so-called solderability (i.e. preventability of oxidation of a copper foil surface of a soldering land to allow molten solder to easily spread on the copper foil surface) can be improved, thereby sufficiently reducing the solder balls. With the content of the (A) component being not more than the above upper limit, a flux residue amount can be sufficiently reduced.

### (B) Component

The (B) component in a form of the activator used in the present exemplary embodiment includes at least one compound selected from the group consisting of (B1) an aromatic carboxylic acid having hydroxyl groups only at an ortho position or a pros position, (B2) a dicarboxylic acid having an alkylene group and 2 to 8 carbon atoms, and (B3) a monocarboxylic acid having an alkyl group and 2 to 8 carbon atoms. These (B1) to (B3) components are unlikely to be an occurrence factor of the void.

Examples of the (B1) component include 2,6-dihydroxy benzoic acid, 2-hydroxy benzoic acid, 1-hydroxy-2-naphthoic acid, and 3-hydroxy-2-naphthoic acid, among which 2,6-dihydroxy benzoic acid is especially preferable. One of the (B1) components may be used alone, or two or more of the (B1) components may be mixed for use.

Examples of the (B2) component include oxalic acid, malonic acid, succinic acid, glutaric acid, adipic acid, pimelic acid, and suberic acid. Among the above, succinic acid, glutaric acid, and adipic acid are preferable, and succinic acid and adipic acid are more preferable. One of the (B2) components may be used alone, or two or more of the (B2) components may be mixed for use.

Examples of the (B3) component include an acetic acid, propionic acid, butyric acid, valeric acid, caproic acid, enanthic acid, and caprylic acid. One of the (B3) components may be used alone, or two or more of the (B3) components may be mixed for use.

Among the (B1) to (B3) components, the (B1) and (B2) components are more preferable in terms of void reduction and activation effect, and the (B1) component is especially preferable.

In terms of void reduction and activation effect, a sum of the contents of the (B1) to (B3) components with respect to 100 mass% of the flux composition is preferably in a range from 1 mass% to 7 mass%, more preferably in a range from 1.5 mass% to 5 mass%, further preferably in a range from 2 mass% to 3 mass%.

In the present exemplary embodiment, the (B) component optionally further contains (B4) a dimer acid. The (B4) component, which has a tendency to prevent reoxidation of the solder powder, can synergistically enhance the effect of the other activator(s). Further, the (B4) component is unlikely to be an occurrence factor of the void.

The (B4) component is preferably a dimer acid generated by polymerization of unsaturated aliphatic acids. The unsaturated aliphatic acid preferably has, though not specifically limited, 8 to 22 carbon atoms, more preferably 12 to 18 carbon atoms, further preferably 18 carbon atoms. Further, the dimer acid, which is only required to contain a dibasic acid as a main component (50 mass% or more), optionally contains a monobasic acid or tribasic acid.

In the present exemplary embodiment, it is preferable that no organic acid other than (B1) to (B4) components should be used in order to reduce chip-side capillary balls and voids.

In terms of prevention of voids and activation effect, the content of the (B4) component is preferably in a range from 1 mass% to 20 mass% with respect to 100 mass% of the flux composition, more preferably in a range from 3 mass% to 15 mass%, especially preferably in a range from 5 mass% to 10 mass%.

The (B) component optionally contains, in addition to the (B1) to (B4) components, an additional activator ((B5) halogen activator, (B6) amine activator, and the like) as long as an object of the invention is achievable. It should be noted that the sum of the contents of the (B1) to (B4) components with respect to 100 mass% of the (B) component is preferably 90 mass% or more, more preferably 95 mass% or more, in terms of void reduction and activation effect.

The (B5) component may be a covalent compound of a single element selected from chlorine, bromine, and fluorine (i.e. chloride, bromide, and fluoride), or alternatively, a covalent compound of any two or all of chlorine, bromine, and fluorine. These compounds are preferably compounds (e.g. alcohol halide and carboxyl halide compound) including a polar group such as a hydroxyl group and carboxyl group in order to improve solubility to an aqueous solvent. Examples of the alcohol halide include alcohol bromide (e.g. 2,3-dibromopropanol, 2,3-dibromobutanediol, trans-2,3-dibromo-2-butene-1,4-diol, 1,4-dibromo-2-butanol, and tribromoneopentyl alcohol), alcohol chloride (e.g. 1,3-dichloro-2-propanol, and 1,4-dichloro-2-butanol), alcohol fluoride (e.g. 3-fluorocatechol), and other compounds equivalent to the above. Examples of the carboxyl halide compound include a carboxyl iodide compound (e.g. 2-iodobenzoic acid, 3-iodobenzoic acid, 2-iodopropionic acid, 5-iodosalicylic acid, and 5-iodoanthranilic acid), a carboxyl chloride compound (e.g. 2-chlorobenzoic acid and 3-chloropropionic acid), a carboxyl bromide compound (e.g. 2,3-dibromopropionic acid, 2,3-dibromosuccinic acid, and 2-bromobenzoic acid), and other compounds equivalent to the above. It should be noted that one of the compounds may be used alone, or two or more of the above may be mixed for use.

Examples of the (B6) component include: amines such as a polyamine (e.g. ethylenediamine); amine salts such as salts of an organic acid and inorganic acid (e.g. hydrochloric acid, sulfuric acid, and hydrobromic acid) of amines (e.g. trimethylolamine, cyclohexylamine, diethylamine) or amino alcohol; amino acids such as glycine, alanine, asparagine acid, glutamic acid, and valine; amide compound; and imidazole compound. Specific examples include diphenylguanidine hydrobromide, cyclohexylamine hydrobromide, diethylamine salt (e.g. hydrochloride, succinate, adipate, and sebacate), triethanolamine, monoethanol amine, and hydrobromide of these amines.

The content of the (B) component with respect to 100 mass% of the flux composition is preferably in a range from 1 mass% to 25 mass%, more preferably in a range from 2 mass% to 20 mass%, especially preferably in a range from 3 mass% to 15 mass%. With the content of the (B) component being less than the above lower limit, solder balls are likely to be generated. In contrast, with the content of the (B) component exceeding the above upper limit, insulating performance of the flux composition tends to be lowered.

### (C) Component

It is necessary for the (C) component in a form of the solvent used in the present exemplary embodiment to contain a (C1) component in a form of a diol or a diol diacetate whose boiling point is in a range from 220 degrees C to 250 degrees C. With the (C1) component, occurrence of voids can be reduced.

It should be noted that, when the boiling point of the (C1) component is less than 220 degrees C or more than 250 degrees C, the occurrence of voids cannot be sufficiently reduced. The boiling point described herein refers to a boiling point at 1013 hPa. Further, in terms of void reduction, the boiling point of the (C1) component is preferably in a range from 220 degrees C to 240 degrees C, further preferably in a range from 225 degrees C to 235 degrees C, especially preferably in a range from 230 degrees C to 235 degrees C.

Examples of the (C1) component include 1,4-butanediol (boiling point: 230 degrees C), 1,5-pentanediol (boiling point: 240 degrees C), 2-ethyl-1,3-hexanediol (boiling point: 242 degrees C), 1,2-hexanediol (boiling point: 223 degrees C), dipropylene glycol (boiling point: 230 degrees C), 1,4-butanediol diacetate (boiling point: 232 degrees C), and 1,3-butylenediol diacetate (boiling point: 232 degrees C). Among the (C1) components, 1,4-butanediol and 1,3-butylenediol diacetate are more preferable in view of the melting point of the solvent. One of the (C1) components may be used alone, or two or more of the (C1) components may be mixed for use.

The (C) component optionally contain a solvent ((C2) component) other than the (C1) component as long as an object of the invention is achievable.

Examples of the (C2) component include diethylene glycol monohexyl ether, diethylene glycol monobutyl ether, α,β,γ-terpineol, benzyl glycol, diethylene glycol mono 2-ethylhexyl ether, tripropylene glycol, diethylene glycol monobenzyl ether, diethylene glycol dibutyl ether, tripropylene glycol monomethyl ether, dipropylene glycol monobutyl ether, ethylene glycol mono 2-ethylhexyl ether, diethylene glycol monoethyl ether acetate, and 2,2-dimethyl-1,3-propanediol. One of the (C2) components may be used alone, or two or more of the (C2) components may be mixed for use.

When the (C2) component is contained, the mass ratio of the (C2) component to the (C) component ((C2)/(C)) is preferably in a range from 1/15 to 1/1, more preferably in a range from 1/10 to 1/2, especially preferably in a range from 1/5 to 1/3 in order to make a balance between void reduction and printability.

The content of the (C) component with respect to 100 mass% of the flux composition is preferably in a range from 20 mass% to 60 mass%, more preferably in a range from 25 mass% to 50 mass%, especially preferably in a range from 30 mass% to 40 mass%. With the content of the solvent being within the above range, viscosity of resulting solder composition can be adjusted as needed to an appropriate range.

In the present exemplary embodiment, a thixotropic agent is optionally contained in view of printability. Examples of the thixotropic agent used in the present exemplary embodiment include hardened castor oil, amides, kaolin, colloidal silica, organic bentonite, and glass frit. One of the thixotropic agents may be used alone, or two or more of the thixotropic agents may be mixed for use.

When the thixotropic agent is contained, the content of the thixotropic agent with respect to 100 mass% of the flux composition is preferably in a range from 2 mass% to 20 mass%, more preferably in a range from 4 mass% to 12 mass%. With the content of the thixotropic agent being less than the above lower limit, thixotropic properties are poorly exhibited, so that solder is likely to be drooped. In contrast, with the content of the thixotropic agent being more than the above upper limit, thixotropic properties are likely to be excessively exhibited to cause printing failure.

### Other Component(s)

In addition to the components (A), (B), and (C) and the thixotropic agent, the flux composition usable in the present exemplary embodiment is optionally added with other additives and other resins, as needed. Examples of the other additives include an antifoaming agent, antioxidant, modifier, delustering agent, and foaming agent. The content of the additive with respect to 100 mass% of the flux composition is preferably in a range from 0.01 to 5 mass%. Examples of the other additives include an acrylic resin.

### Solder Composition

Next, a solder composition of the present exemplary embodiment will be described below. The solder composition according to the present exemplary embodiment contains the above-described flux composition of the present exemplary embodiment and (D) a solder powder as described below.

The content of the flux composition with respect to 100 mass% of the solder composition is preferably in a range from 5 mass% to 35 mass%, more preferably in a range from 7 mass% to 15 mass%, especially preferably in a range from 8 mass% to 12 mass%. When the content of the flux composition is less than 5 mass% (i.e. when the content of the solder powder exceeds 95 mass%), the flux composition and the solder powder tend to be not easily mixed due to the shortage of the flux composition (i.e. binder). In contrast, when the content of the flux composition exceeds 35 mass% (i.e. when the content of the solder powder falls below 65 mass%), a sufficient solder joint is not likely to be formed with the use of the resulting solder composition.

### (D) Component

The (D) component in a form of the solder powder used in the present exemplary embodiment is a solder powder whose melting point ranges from 200 degrees C to 250 degrees C. In the present exemplary embodiment, the boiling point of the (C1) component is determined on the basis of the use of the solder powder whose melting point ranges from 200 degrees C to 250 degrees C.

A solder alloy in the solder powder is preferably an alloy whose main component is tin (Sn). Examples of a second element in the alloy include silver (Ag), copper (Cu), zinc (Zn), bismuth (Bi), indium (In), and antimony (Sb). The alloy optionally include other element(s) (third and later element(s)), as needed. Examples of the other element(s) include copper, silver, bismuth, indium, antimony, and aluminum (Al).

A lead-free solder powder herein refers to powder of a solder metal or alloy without lead content. The amount of lead, which is containable as inevitable impurities in the lead-free solder powder, is preferably 300 mass ppm or less.

Specific examples of the solder alloy for the lead-free solder powder include an Sn-Ag alloy and an Sn-Ag-Cu alloy. Among the above, the Sn-Ag-Cu alloy is preferably used in view of strength of the solder joint. The melting point of the Sn-Ag-Cu solder is typically in a range from 200 degrees C to 250 degrees C (preferably in a range from 200 degrees C to 240 degrees C). It should be noted that the melting point of Sn-Ag-Cu solder with low silver content is in a range from 210 degrees C to 250 degrees C (preferably in a range from 220 degrees C to 240 degrees C).

An average particle size of the (D) component, which is typically in a range from 1 µm to 40 µm, is preferably in a range from 1 µm to 35 µm, more preferably in a range from 2 µm to 30 µm, especially preferably in a range from 3 µm to 20 µm in view of applicability to an electronic board whose pitches between solder pads are narrow. It should be noted that the average particle size is measurable using a dynamic-light-scattering particle-size-measurement device.

### Method of Producing Solder Composition

The solder composition according to the present exemplary embodiment is producible by blending the above-described flux composition and the above-described (D) solder powder at a predetermined ratio and agitating and mixing the flux composition and the solder powder.

### Electronic Board

Next, the electronic board of the present exemplary embodiment will be described below. The electronic board of the present exemplary embodiment includes a soldered part using the above-described solder composition. The electronic board of the invention is producible by installing an electronic component on an electronic board (e.g. printed wiring board) using the solder composition.

The above-described solder composition of the present exemplary embodiment can sufficiently reduce large-size voids even in a large print area for the solder composition. Accordingly, electronic components requiring large electrode terminal(s) (e.g. QFN and power transistor) are usable. Further, the print area of the solder composition may be, for instance, 20 mm² or more, 30 mm² or more, or 40 mm² or more. It should be noted that the print area corresponds to the area of the electrode terminal of the electronic component.

Examples of usable applicators include a screen printer, metal mask printer, dispenser, and jet dispenser.

The electronic component can be installed on the electronic board through a reflow process, where the electronic component is placed on the solder composition applied by the applicator and is heated in a reflow furnace under predetermined conditions to install the electronic component on the printed wiring board.

In the reflow process, the electronic component, which is placed on the solder composition, is heated in the reflow furnace under the predetermined conditions. The electronic component and the printed wiring board can be sufficiently soldered through the reflow process. As a result, the electronic component can be installed on the printed wiring board.

The reflow conditions may be determined as needed depending on the melting point of the solder. For instance, a preheat temperature is preferably in a range from 140 degrees C to 200 degrees C, more preferably in a range from 150 degrees C to 160 degrees C. A preheat time is preferably in a range from 60 seconds to 120 seconds. A peak temperature is preferably in a range from 230 degrees C to 270 degrees C, more preferably in a range from 240 degrees C to 255 degrees C. Further, a retention time at a temperature of 220 degrees C or more is preferably in a range from 20 seconds to 60 seconds.

It should be noted that the solder composition and the electronic board in the present exemplary embodiment are not limited by the above-described exemplary embodiment but the invention encompasses modifications and improvements as long as an object of the invention is achievable.

For instance, the electronic board, which is provided by bonding the printed wiring board and the electronic component through the reflow process, is not necessarily bonded through the reflow process. For instance, the printed wiring board and the electronic component are optionally bonded through a process of heating the solder composition using laser beam (laser heating process) instead of the reflow process. A laser source usable for the above, which is not specifically limited, is appropriately selectable for use depending on a wavelength corresponding to an absorption band of the metal. Examples of the laser source include a solid laser (e.g. ruby, glass, YAG), semiconductor laser (e.g. GaAs and InGaAsP), liquid laser (e.g. pigment), and gas laser (e.g. He-Ne, Ar, CO₂, and excimer).

### Examples

Next, the invention will be described in further detail below with reference to Examples and Comparatives. It should however be noted that the invention is by no means limited by these Examples and Comparatives. Materials used in Examples and Comparatives are as follows.

### (A) Component

Rosin-based resin: hydrogenated acid-modified rosin, trade name "Pinecrystal KE-604", manufactured by Arakawa Chemical Industries, Ltd.

### (B1) Component

Organic acid A: 2,6-dihydroxy benzoic acid, manufactured by Tokyo Chemical Industry Co., Ltd.

### (B2) Component

Organic acid B: succinic acid, manufactured by Tokyo Chemical Industry Co., Ltd.
Organic acid C: adipic acid, manufactured by Tokyo Chemical Industry Co., Ltd.
Organic acid D: glutaric acid, manufactured by Tokyo Chemical Industry Co., Ltd.
Organic acid E: pimelic acid, manufactured by Tokyo Chemical Industry Co., Ltd.
Organic acid F: suberic acid, manufactured by Tokyo Chemical Industry Co., Ltd.

### (B4) Component

Organic acid G: dimer acid, trade name "UNIDYME14", manufactured by ARBROWN Co., Ltd.

### (B5) Component

Halogen activator: trans-2,3-dibromo-2-butene-1,4-diol (TDBD)

### (C1) Component

Solvent A: 1,4-butanediol (boiling point: 230 degrees C), manufactured by Tokyo Chemical Industry Co., Ltd.
Solvent B: 1,3-butylenediol diacetate (boiling point: 232 degrees C), manufactured by Daicel Corporation
Solvent C: 1,5-pentanediol (boiling point: 240 degrees C), manufactured by Tokyo Chemical Industry Co., Ltd.
Solvent D: 2-ethyl-1,3-hexanediol (boiling point: 242 degrees C), manufactured by NIPPON NYUKAZAI CO., LTD.
Solvent E: 1,4-butanediol diacetate (boiling point: 232 degrees C), trade name "CELTOL 1,4-BDDA", manufactured by Daicel Corporation
Solvent F: dipropylene glycol (boiling point: 230 degrees C), manufactured by Tokyo Chemical Industry Co., Ltd.
Solvent G: 1,2-hexanediol (boiling point: 223 degrees C), manufactured by OSAKA ORGANIC CHEMICAL INDUSTRY LTD.

### (C2) Component

Solvent H: 2,4-diethyl-1,5-pentanediol (boiling point: 300 degrees C), trade name "Kyowadiol PD-9", manufactured by KH Neochem Co., Ltd.
Solvent I: 1-(2-butoxy-1-methylethoxy)propane-2-ol (boiling point: 230 degrees C), manufactured by Dow Chemical Company
Solvent J: diethylene glycol monoethyl ether acetate (boiling point: 217 degrees C) Solvent K: dipropylene glycol monopropyl ether (boiling point: 212 degrees C)

### (D) Component

Solder powder: alloy composition of Sn-3.0Ag-0.5Cu, particle size distribution ranging from 20 to 38 µm, solder melting point ranging from 217 to 220 degrees C Other Components
Organic acid H: 2,4-dihydroxy benzoic acid, manufactured by Tokyo Chemical Industry Co., Ltd.
Organic acid I: eicosanic diacid, manufactured by Tokyo Chemical Industry Co., Ltd. Thixotropic agent: trade name "Slipax H", manufactured by Nippon Kasei Chemical Co., Ltd
Antioxidant: trade name "Irganox 245", manufactured by BASF SE

### Example 1

The rosin-based resin of 46 mass%, organic acid A of 2 mass%, organic acid G of 8.5 mass%, halogen activator of 0.5 mass%, solvent A of 35 mass%, thixotropic agent of 6 mass%, and antioxidant of 2 mass% were put into a vessel and were mixed using a planetary mixer to obtain a flux composition.

Subsequently, the resultant flux composition of 11 mass% and solder powder of 89 mass% (total 100 mass%) were put into a vessel and were mixed using a planetary mixer to prepare a solder composition.

### Examples 2 to 12

Solder compositions were prepared in the same manner as Example 1 except that the materials were blended according to composition ratios shown in Table 1.

### Comparatives 1 to 6

Solder compositions were prepared in the same manner as Example 1 except that the materials were blended according to composition ratios shown in Table 1.

### Evaluation of Solder Composition

The resultant solder compositions were evaluated (in terms of chip-side capillary ball, mid-pins capillary ball, QFN void, power transistor component void, and extremely small pad void) through the processes described below. The results are shown in Table 1.

It should be noted that evaluation board used in the below-described processes was prepared as follows.

Specifically, the solder composition was printed on a board ("SP-TDC" manufactured by TAMURA Corporation) capable of installing chip components (e.g. 1608 chip (size: 1.6 mm × 0.8 mm) and 1005 chip (size: 1.6 mm × 0.8 mm), QFP component, QFN chip, and BGA component) through a 120-µm-thick metal mask. Then, with 60 pieces of the chip components being mounted on the board, the solder composition was melted (soldered) in a reflow furnace (manufactured by TAMURA Corporation) under either one of the following reflow conditions A and B, thereby obtaining the evaluation board.

Details of the reflow conditions A and B are as follows.

### (i) Reflow Condition A

The preheat temperature was in a range from 150 to 180 degrees C (for approximately 80 seconds), the time at a temperature of 220 degrees C or more was approximately 50 seconds, and the peak temperature was 245 degrees C.

### (ii) Reflow Condition B

The preheat temperature was in a range from 150 to 180 degrees C (for approximately 80 seconds), the time at a temperature of 220 degrees C or more was approximately 50 seconds, and the peak temperature was 235 degrees C.

### (1) Chip-Side Capillary Ball

The evaluation board obtained under the reflow condition A was observed through a magnifying glass to count the number of solder balls (balls/chip) generated at sides of the chip component.
B: The number of solder balls per a chip was less than three.
D: The number of solder balls per a chip was three or more.

### (2) Mid-Pins Capillary Ball

The evaluation board obtained under the reflow condition A was observed through a magnifying glass to count the number of the solder balls (balls/pin) generated between pins of the QFP component (0.8 mm pitch). Based on the result thereof, the mid-pins capillary balls were evaluated according to the following criteria.
B: The number of solder balls per a pin was less than 100.
D: The number of solder balls per a pin was 100 or more.

### (3) QFN Void

A part of each of the evaluation boards obtained under the reflow conditions A and B, where the QFN component (size: 8 mm × 8 mm, thickness: 0.75 mm) was provided, was observed using an X-ray inspector ("NLX-5000", manufactured by NAGOYA ELECTRIC WORKS CO., LTD.). A void ratio [(void area/electrode area) × 100] was calculated (n=4) based on the obtained image and then was averaged. The QFN void was evaluated based on the void ratio according to the following criteria.
A: The void ratio is less than 15%.
B: The void ratio is 15% or more and less than 20%.
C: The void ratio is 20% or more and less than 25%.
D: The void ratio is 25% or more.

### (4) Power Transistor Component Void

The solder composition was printed on a board having an electrode capable of installing a power transistor (size: 5.5 mm × 6.5 mm, thickness: 2.3 mm, land: tin plating, land area: 30 mm²) through a metal mask having a corresponding pattern. Subsequently, with a power transistor being placed on the solder composition, the board was subjected to a reflow process under the reflow condition A to prepare a test board. A solder joint portion of the obtained test board was observed using an X-ray inspector ("NLX-5000", manufactured by NAGOYA ELECTRIC WORKS CO., LTD.). Then, a void ratio [(void area/electrode area) × 100] of the void in the power transistor, which was observed after the reflow process, was calculated (N=4) based on the obtained image and then was averaged. The power transistor void was evaluated based on the void ratio according to the following criteria.
B: The void ratio is less than 10%.
C: The void ratio is 10% or more and less than 13%.
D: The void ratio is 13% or more.

### (5) Extremely Small Pad Void

A part of each of the evaluation boards obtained under the reflow condition A, where the BGA component (size: 8 mm × 8 mm, thickness: 0.75 mm, pitch: 0.5 mm, number of pads: 228) was provided, was observed using an X-ray inspector ("NLX-5000", manufactured by NAGOYA ELECTRIC WORKS CO., LTD.). A void ratio [(void area/electrode area) × 100] was calculated (n=228) based on the obtained image and then was averaged. The extremely small pad void was evaluated based on the void ratio according to the following criteria.
B: The void ratio is less than 2%.
D: The void ratio is 2% or more.

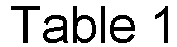

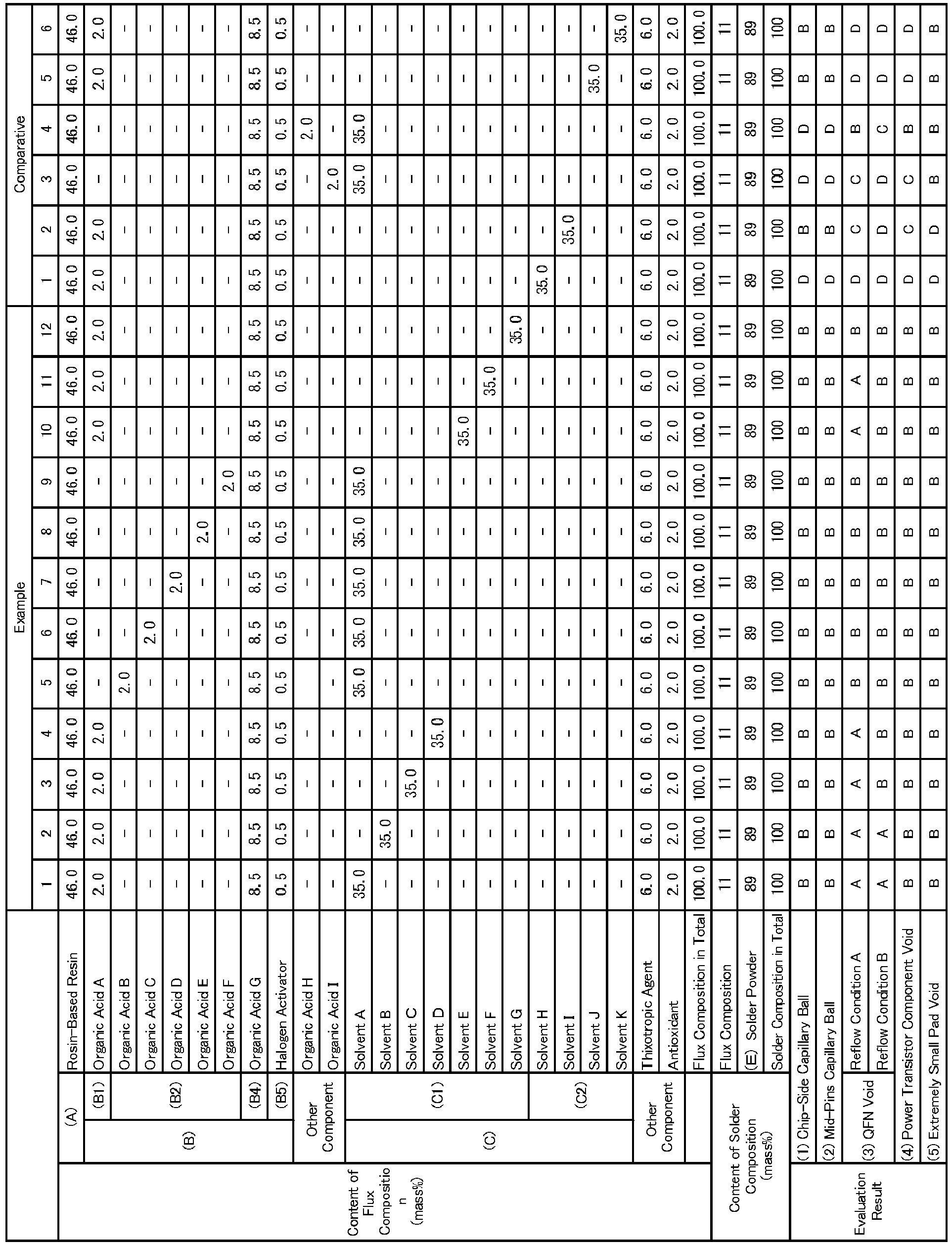

As can be clearly understood from the results shown in Table 1, it has been confirmed that the solder compositions (Examples 1 to 12) of the invention exhibit excellent results in terms of the chip-side capillary ball, mid-pins capillary ball, QFN void, power transistor component void, and extremely small pad void. Accordingly, it has been confirmed that the solder composition of the invention can sufficiently reduce the voids.

### INDUSTRIAL APPLICABILITY

The solder composition of the invention is suitably usable for a technique for installing an electronic component on an electronic board such as a printed wiring board of an electronic device.

## Claims

1. A solder composition comprising:
a flux composition comprising an (A) component in a form of a rosin-based resin, a (B) component in a form of an activator, and a (C) component in a form of a solvent; and
a (D) component in a form of a solder powder whose melting point is in a range from 200 degrees C to 250 degrees C, wherein
the (B) component comprises at least one carboxylic acid selected from the group consisting of a (B1) component in a form of an aromatic carboxylic acid having hydroxyl groups at an ortho position or a pros position, a (B2) component in a form of a dicarboxylic acid having an alkylene group and 2 to 8 carbon atoms, and a (B3) component in a form of a monocarboxylic acid having an alkyl group and 2 to 8 carbon atoms, and
the (C) component comprises a (C1) component in a form of a diol or a diol diacetate whose boiling point is in a range from 220 degrees C to 250 degrees C.

2. The solder composition according to claim 1, wherein
the (C1) component is at least one compound selected from the group consisting of 1,4-butanediol, 1,5-pentanediol, 2-ethyl-1,3-hexanediol, 1,2-hexanediol, dipropylene glycol, 1,4-butanediol diacetate, and 1,3-butylenediol diacetate.

3. The solder composition according to claim 1, wherein
the boiling point of the (C1) component is in a range from 230 degrees C to 250 degrees C.

4. The solder composition according to any one of claims 1 to 3, wherein
the (B) component further comprises a (B4) component in a form of a dimer acid.

5. An electronic board comprising a soldered part using the solder composition according to any one of claims 1 to 4.
